**Europäisches Patentamt**

**European Patent Office**

**Office européen des brevets**

(11) Publication number : **0 558 173 A1**

(12)

# EUROPEAN PATENT APPLICATION

(21) Application number : **93250062.2**

(22) Date of filing : **23.02.93**

(51) Int. Cl.⁵ : **C11B 3/10**

(30) Priority : **28.02.92 US 845116**

(43) Date of publication of application :
**01.09.93 Bulletin 93/35**

(84) Designated Contracting States :
**AT BE CH DE DK ES FR GB GR IE IT LI LU NL
PT SE**

(71) Applicant : **W.R. Grace & Co.-Conn.
Grace Plaza, 1114 Avenue of the Americas
New York, New York 10036-7794 (US)**

(72) Inventor : **Bogdanor, James Marlow
5457 Tilted Stone
Columbia, MD 21045 (US)**
Inventor : **Welsh, William Alan
13271 Styer Court
Highland, MD 20777 (US)**

(74) Representative : **UEXKÜLL & STOLBERG
Patentanwälte
Beselerstrasse 4
D-22607 Hamburg (DE)**

(54) **Process for removal of chlorophyll and color bodies from glyceride oils using amorphous silica alumina.**

(57)  A method of removing chlorophyll and other color bodies to refine glyceride oils is disclosed. The method involves, sequentially, (1) treating the oil to substantially remove phospholipids and soaps and (2) subjecting the treated oil to treatment with a silica alumina adsorbent to remove chlorophyll and other color bodies from the treated oil. The novel method permits the adsorbent to be repeatedly thermally regenerated by calcination to retain a high capacity for the removal of chlorophyll.

EP 0 558 173 A1

Field of the Invention

This invention relates to a method of refining glyceride oils by contacting the oils with an absorbent capable of selectively removing trace contaminants. More specifically, this invention relates to a method of removing chlorophyll and other color bodies from glyceride oils by, subsequentially, (1) treating the oil to substantially remove phospholipids and soaps and (2) subjecting the treated oil to a silica alumina adsorbent to remove chlorophyll and other color bodies from the treated oil. Removal of the phospholipids, soaps and trace metals from the oil prior to treatment with the silica alumina adsorbent prevents loss of adsorbent capacity upon thermal re-activation. This permits the adsorbent to be thermally regenerable by calcination to retain a higher activity for the removal of chlorophyll and other color bodies than regenerated silica alumina adsorbents previously used in prior oil refining processes.

The term "glyceride oils" as used herein is intended to encompass all lipid compositions, including vegetable oils, fish oils and animal fats and tallows. This term is primarily intended to describe the so-called edible oils, i.e., oils derived from fruits or seeds of plants and used chiefly in foodstuffs, but it is understood that oils whose end use is as non-edibles (i.e., technical grade oils) are to be included as well. It should be recognized that the method of this invention also can be used to treat fractionated streams derived from these sources.

Background of the Invention

Refining of crude glyceride oil purifies the oil of many undesirable substances, including color components (such as chlorophyll A and red and yellow color bodies), phospholipids, free fatty acids and other volatile species that impart undesirable colors, flavors and odors to the oil. Removal of these species results in oil having good appearance, flavor, odor and stability. Many of these species are removed by contacting the oil with an adsorbent (i.e., bleaching earths or amorphous silica). Various forms of acid treatment also have been used at different stages of the refining process, and for different purposes in the oil refining industry.

Crude glyceride oils, particularly vegetable oils, are refined by a multi-stage process, the first step of which is degumming by treatment typically with water or with a chemical such as phosphoric acid, citric acid or acetic anhydride. For example, Vinyukova et al., "Hydration of Vegetable Oils by Solutions of Polarizing Compounds," Food and Feed Chem., Vol. 17-9, pp. 12-15 (1984), discloses degumming using a hydration agent containing citric acid, sodium chloride and sodium hydroxide in water to increase the removal of phospholipids from sunflower and soybean oils. U.S. Pat. No. 4,049,686 (Ringers et al.) discloses dispersing a substantially concentrated acid or anhydride in the oil, adding water and separating the aqueous phase containing gums and phospholipids. In addition to the use of organic acids during oil degumming, citric acid and other weak acids have been used as trace metal deactivating agents to promote taste and oxidative stability of edible oils.

After degumming, the oil may be refined either by a chemical process including neutralization, bleaching and deodorizing steps, or a physical process may be used, including a pretreating and bleaching step and a steam refining and deodorizing step. The removal of phospholipids and chlorophyll from edible oils has been the object of a number of previously proposed physical and chemical process steps. Clays or bleaching earths most commonly have been used for removing phospholipids and color bodies from glyceride oils. These adsorbents may be used in their naturally occurring form or they may be acid-activated prior to use. U.S. Pat. No. 4,443,379 (Taylor et al.) describes the bleaching clays and acid-activation method commonly used for this purpose, noting that Fuller's earth and acid-treated sub-bentonites have an adsorptive capacity for color impurities in oils and that the acid-treated sub-bentonites have the highest adsorptive capacity.

It is also known that amorphous silicas may be used in the oil refining process. U.S. Pat. No. 4,629,588 (Welsh et al.) teaches the utility of amorphous silica adsorbents for the removal of trace contaminants, specifically phospholipids and associated metal ions, from glyceride oils. U.S. Pat. No. 4,734,226 (Parker et al.) teaches the removal of these trace contaminants by adsorption onto amorphous silica which has been treated with an organic acid, such as citric acid, tartaric acid, acetic acid or ascorbic acid. Direct color improvement of glyceride oils has not previously been associated with the use of silica adsorbents in the bleaching step, although treatment with silica does facilitate and improve the decolorization which takes place in subsequent deodorization. U.S. Pat. No. 4,781,864 (Pryor et al.) teaches removal of phospholipids and/or chlorophyll and other color bodies by contacting the oil with an inorganic acid, an acid salt or a strong organic acid having a pka of about 3.5 or lower in such a manner that at least a portion of said acid is retained in the pores of the silica.

In current refinery practice, chlorophyll is most efficiently removed from glyceride oils by the use of activated or non-activated clays and carbon. Although commonly used in the industry, clays and bleaching earths suffer from a number of disadvantages. They typically do not filter well and are associated with significant neutral oil losses. Moreover, spent bleaching earth has a tendency to undergo spontaneous combustion, making its handling hazardous.

Many attempts have been made to improve the bleaching process. One of the main cost-determining factors of the process is the loss of oil during the separation step. The cost of the bleaching adsorbent is often exceeded by that of the oil lost by retention in the spent adsorbent. This oil is difficult to recover and, after recovery, can be badly oxidized and is often of poor quality. Hence, the spent earth is often discarded without treatment. To reduce such losses, attempts have been made to increase the bleaching activity of the bleaching adsorbents to allow smaller quantities of adsorbent to be used. The need for highly active bleaching substances has become more urgent in recent years. It has been recognized that for environmental reasons the amount of waste material to be discarded should be minimized.

To reduce costs and environmental concerns associated with the bleaching process, it has been proposed to employ instead of a natural clay or carbon, a synthetic adsorbent material which is regenerable for repeated use. U.S. Pat. No. 4,812,436 (Stoal et al.) teaches the use of silica alumina adsorbent to simultaneously remove color matter, such as carotenoids and chlorophyll, and trace materials, such as residual phospholipids, soap, gums, metals and oxidation products. Stoal et al. teaches that the silica alumina adsorbent is regenerable by calcination at a temperature of at least 300°C. However, the presence of soaps, phospholipids and other trace contaminants in the oils during treatment with silica alumina tends to result in a loss of activity of the adsorbent on regeneration by calcination.

## SUMMARY OF THE INVENTION

We have now discovered a process for effectively removing chlorophyll, as well as yellow and red color bodies from glyceride oils which process enables a silica alumina adsorbent to be thermally regenerated by calcination to retain a high activity for adsorption of chlorophyll and other color bodies. It has been found that removing phospholipids and other trace elements from glyceride oils prior to treatment of the oil with an amorphous silica alumina adsorbent increases the ability of the adsorbent to adsorb chlorophyll. In addition, the prior removal of the phospholipids, soaps and trace metals before contacting the oil with the silica alumina adsorbent greatly enhances the regenerability of the silica alumina adsorbent such that its activity to remove chlorophyll and other color bodies over repeated regeneration cycles is restored. Reference to removal or reduction of chlorophyll in the specification and in the claims shall refer to decolorization of the oil, that is, shall also be intended to encompass removal or reduction of red and yellow color bodies, if present, whether or not in the presence of chlorophyll, unless otherwise noted. For purpose of this invention the term "color bodies" and "pigments" are used interchangeably herein.

It is the primary purpose of this invention to provide a method of reducing the chlorophyll content of a glyceride oil to acceptable levels and also to provide a thermally regenerated silica alumina adsorbent which has a higher capability to remove chlorophyll than regenerated silica alumina adsorbents previously used in known oil refining processes. Upon regeneration, the silica alumina adsorbent retains all or substantially all of its initial ability to remove chlorophyll using the method described herein. Adsorption of chlorophyll onto amorphous silica alumina in the manner as described can reduce, or potentially eliminate, the need to use clay or bleaching earth adsorbents in the refining process.

Another object of the invention is to provide a more efficient and more economical method of reducing the chlorophyll content of degummed oil by providing an adsorbent which can be thermally regenerated by repeated calcination to yield, even after numerous regeneration cycles, an adsorbent having high activity to remove chlorophyll. This regenerability of the adsorbent allows the repeated use of the silica alumina adsorbent which results in a substantial reduction of spent materials requiring disposal in landfills. This can substantially reduce the average costs of the bleaching process.

It is another object of the invention to provide an improved physical refining process for glyceride oils by subsequentially reducing the phospholipids and chlorophyll contents of oils to commercially acceptable level.

## Detailed Description of the Invention

The process of the invention, as described in detail herein, comprises the steps of selecting a glyceride oil comprising phospholipids and chlorophyll and other pigments; treating the oil to remove phospholipids and other trace contaminants such that the treated oil contains a commercially acceptable level of phospholipids; contacting the treated oil with an amorphous silica alumina; allowing chlorophyll and other pigments to be adsorbed from the treated oil; and separating the treated oil from the adsorbent to yield glyceride oil having commercially acceptable levels of phospholipids and chlorophyll and other pigments. Throughout the description of this invention and in the claims, unless otherwise indicated, reference to the removal of phospholipids is meant to encompass the removal of soaps and other associated trace contaminants, i.e. metal ions, as well.

The process described herein can be used for the removal of chlorophyll and phospholipids from any glyceride oil, for example, oils of soybean, rapeseed (canola), peanut, corn, sunflower, palm, coconut, olive, cottonseed, etc. Chlorophyll is produced only in plants and this invention is therefore intended primarily for use with vegetable oils. However, it may be desired to treat animal fats and tallows, or other oils which contain little or no chlorophyll, in this manner for removal of dietary chlorophyll or other color bodies. It is chlorophyll A which is of greatest concern herein, but references herein to chlorophyll will be understood to refer to all relevant forms of chlorophyll, or their degradation products, such as pheophytin. Removal of chlorophyll from vegetable oils is a significant step in refining vegetable oils because the chlorophyll imparts an unacceptably high level of green coloring to the oil. In addition, chlorophyll has been shown to cause oxidative instability of oils on exposure to light. Chlorophyll levels vary dramatically from oil to oil, as well as from crop to crop, depending on growing and harvesting conditions. Although target chlorophyll values vary from refiner to refiner, the target values for bleached oils and deodorized oils typically are in the range of about 0.05 to about 0.15 ppm or less.

Removal of phospholipids, soaps, and other trace containments, e.g. metal ions, from edible oils prior to treating the oil with a silica alumina adsorbent is a critical initial step in the oil refining process of the invention. Phospholipids, soaps and associated trace metal contaminants present in the oils during treatment with the silica alumina adsorbent tend to build up on the adsorbent which leads to acid site neutralization and a loss of chlorophyoll adsorption capacity. Typically, the commercially acceptable concentration of phosphorus in the treated oil product should be less than about 5.0 ppm, preferably less than about 2.0 ppm, according to general industry practice. As an illustration of the refining goals with respect to trace contaminants, typical phosphorus levels in soybean oil at various stages of chemical refining are shown in Table I. Phosphorus levels at corresponding stages in physical refining processes will be comparable.

### TABLE I[1]

| Stage | Trace Contaminant Levels (ppm) | | | | |
|---|---|---|---|---|---|
| | P | Ca | Mg | Fe | Cu |
| Crude Oil | 450-750 | 1-5 | 1-5 | 1-3 | 0.03-0.05 |
| Degummed Oil | 60-200 | 1-5 | 1-5 | 0.4-0.5 | 0.02-0.04 |
| Caustic Refined Oil | 10-15 | 1 | 1 | 0.3 | 0.003 |
| End Product | 1-15 | 1 | 1 | 0.1-0.3 | 0.003 |

[1]Data assembled from the Handbook of Soy Oil Processing and Utilization, Table I, p. 14 (1980), and from FIG. 1 from Christenson, Short Course: Processing and Quality Control of Fats and Oils, presented at America Oil Chemists' Society, Lake Geneva, WI (May 5-7, 1983).

In conjunction with phospholipid removal, the initial treatment should also remove from edible oils ionic forms of the metals calcium, magnesium, iron and copper, which may be chemically associated with phospholipids and soaps. These metal ions themselves have a deleterious effect on the refined oil products. Calcium and magnesium ions can result in the formation of precipitates. The presence of iron and copper ions promote oxidative instability. Each of these metal ions is associated with catalyst poisoning where the refined oil is catalytically hydrogenated. Typical acceptable concentrations of these metals in soybean oil at various stages of chemical refining are shown in Table I. Metal ion levels at corresponding stages of physical refining processes will be comparable.

The sodium salts of fatty acids (soaps) are created in caustic refining. These soaps can neutralize the acidity of the silica alumina adsorbent reducing its effectiveness and adversely affect the stability of the adsorbent's porosity during thermal regeneration. Generally, the acceptable concentration of soaps in the treated oil should be no greater than 10 ppm, preferably about 0-10 ppm.

For purposes of this invention the term "phospholipid-depleted" oil shall be used in the specification and the claims to refer to a glyceride oil which has been treated to remove phospholipids, soaps and associated trace metal contaminants to acceptable concentrations as defined hereinabove.

Removal of the phospholipids, soaps and trace metals from glyceride oil may be accomplished by any known oil refining process capable of reducing the levels of such contaminants to commercially acceptable levels. For example, phospholipids and associated trace contaminants may be removed from degummed oils by contacting the oil with an amorphous silica adsorbent such as described in U.S. Patent Nos. 4,629,588 and 4,734,226. The oil may also be treated with clays and bleaching earths (acid-activated or non-activated) commonly used for removing phospholipids and soaps from glyceride oils.

The silica alumina adsorbent useful herein is an amorphous silica which contains less than about 10%, preferably about 2% to 8%, aluminum as $Al_2O_3$, and may contain minor amounts (less than 1.0%) of other inorganic constituents, such as sodium as $Na_2O$, titanium as $TiO_2$, calcium as $CaO$, iron as $Fe_2O_3$ and zirconium as $ZrO_2$ and the like. The term "amorphous silica" as used herein is intended to embrace silica gels, precipitated silicas, dialytic silicas and fumed silicas in their various prepared or activated forms. The specific manufacturing process used to prepare the amorphous silica is not expected to affect its utility in this method. The amorphous silica adsorbent selected for use in this invention may be reacted with alumina in the silica manufacturing process or at a subsequent time. The formation of silica alumina is described below.

The silica alumina can be prepared in several ways. It can, for example, suitably be prepared using both silica gels and precipitated silicas prepared by the destabilization of aqueous silicate solutions by acid neutralization. In the preparation of silica gel, a silica hydrogel is formed which then typically is washed to low salt content. The washed hydrogel may be milled, or it may be dried, ultimately to the point where its structure no longer changes as a result of shrinkage. The dried, stable silica is termed a xerogel or aerogel, depending on whether the material was dried slowly or quickly, respectively. In the preparation of precipitated silicas, the destabilization is carried out in the presence of inorganic salts, which lower the solubility of silica and cause precipitation of hydrated silica. The precipitate typically is filtered, washed and dried. Dialytic silica is prepared by precipitation of silica from a soluble silicate solution containing electrolyte salts (e.g. $NaNO_3$, $Na_2SO_4$, $KNO_3$) while electrodialyzing, as described in pending U.S. patent application Ser. No. 533,206 (Winyall), "Particulate Dialytic Silica", filed Sept. 20, 1983, now U.S. Pat. No. 4,508,607. Fumed silicas (or pyrogenic silicas) are prepared from silicon tetrachloride by high-temperature hydrolysis, or other convenient methods.

Alumina may be incorporated into the silica by co-gellation or co-precipitation with the silica. For example, a solution of an aluminum salt such as aluminum sulfate or sodium aluminate can be reacted with a solution of a silicon salt or a slurry of solid silica gel to form a silica alumina. Alternatively, an aluminum salt can be reacted with a previously produced silica (at any stage in its production). The synthesis of acidic silica aluminas is well known as discussed in Solid Acids and Bases by K. Tanabe.

The amorphous silica alumina can be initially used in the process of this invention in the calcined or uncalcined form. Preferably, the process is carried out using a calcined silica alumina. Calcination of the silica alumina may be accomplished using any conventional process, such as heating the adsorbent at a temperature of at least about 500°C; preferably at a temperature of about 600 to 900°C; most preferably at a temperature of about 750 to about 850°C.

In the preferred embodiment of this invention, the selected silica alumina adsorbent should have the highest possible surface area and pore volume, while being capable of maintaining good structural integrity upon contact with fluid media. The requirement of structural integrity is particularly important where the silica adsorbents are used in continuous flow systems, which are susceptible to disruption and plugging. Amorphous silica alumina suitable for use in this process have surface areas of at least about 100, preferably at least about 200 and most preferably at least about 300 to about 1200 square meters per gram, as measured by the nitrogen B-E-T method described in Brumauer et al., J. Am. Chem. Soc., Vol. 60, p. 309 (1938). Amorphous silica alumina meeting this description will be considered "high surface area" silicas as that term is used herein. For chlorophyll removal the pore diameter of the silica alumina adsorbent is not critical. This is in contrast to adsorbents typically used for removal of phospholipids which adsorbents require a critical pore volume and demonstrate excellent capacity independent of pore diameter. Preferably, the silica alumina adsorbent has an average pore diameter of at least 6.0 nm as estimated by the following equation:

$$\text{Average Pore Diameter (nm)} = \frac{4000 \times \text{Pore Volume (cc/g)}}{\text{Surface Area (m}^2\text{/g)}}$$

Pore volume is measured by ASTM procedure of 4222-83. The particle size of the amorphous silica alumina adsorbent should be in the range of 1-100 microns, preferably about 10-30 microns.

The adsorption step itself is accomplished by conventional methods in which the amorphous silica alumina and the phospholipid-depleted oil are contacted, preferably in a manner which facilitates the adsorption of chlorophyll and other pigments. The adsorption step may be by any convenient batch or continuous process. In any case, agitation or other mixing will enhance the adsorption efficiency of the treated silica alumina.

The adsorption may be conducted at any convenient temperature at which the oil is a liquid. Preferably, the temperature is from about 80°C to about 130°C; most preferably about 90°C to about 110°C. The glyceride oil and silica alumina are contacted as described above for a period sufficient to achieve the desired chlorophyll content in the treated oil. The specific contact time will vary somewhat with the selected process, i.e., batch or continuous, and with the condition of the oil to be treated. In addition, the adsorbent usage, that is, the relative quantity of adsorbent brought into contact with the oil, will affect the amount of chlorophyll removed. The adsorbent usage is quantified as the weight percent of amorphous silica alumina (on a dry weight basis after ignition at 1750°F), calculated on the weight of the oil processed.

The silica alumina adsorbent usage in the process of the invention will vary depending on the oil to be treated and the content of chlorophyll and other color bodies present in the oil.

After adsorption the silica alumina is separated from the oil by filtration or other suitable means. Calcination can be carried out to regenerate the spent silica alumina adsorbent, i.e. adsorbent which has previously been used for chlorophyll removal in the oil refining process according to the present invention. Calcination is accomplished at a time and temperature sufficient to remove all or substantially all of oil retained in the pores. Typically, a temperature of at least about 400°C, preferably a temperature of about 500 to about 900°C, is employed. The optimal duration of the calcination heat treatment depends on the temperature, at higher temperatures shorter times being sufficient. The desirable residence time further depends on the heat transfer. For example, relatively short times can be sufficient when using a rotary calciner. The calcination preferably is carried out in equipment that allows gas circulation and removal of evaporation and combustion products. After calcination to less than about 1.0% carbon on the silica alumina, the adsorbent is suitable for reuse to adsorb chlorophyll. The spent silica alumina adsorbent may also be regenerated by other methods such as, for example, solvent extraction, supercritical fluid extraction, or washing with aqueous base solutions.

As seen in the Examples, significant reduction in chlorophyll and other color bodies is achieved by the method of this invention. The natural chlorophyll adsorption capacity of silica alumina is not lost or compromised because of the lack of large amounts of phospholipids and other trace contaminants in treated oils. In fact, the effectiveness of the silica alumina to remove chlorophyll, and red and yellow color bodies, from glyceride oils is dramatically improved by pretreating the oil to remove appreciable amounts of phospholipids, soaps and associated contaminants. At the same time, the silica alumina adsorbent remains quite effective in removing chlorophyll after repeated regeneration by calcination. Thus, it is one of the novel features of this invention that the novel process described herein significantly increases the capacity of silica alumina for chlorophyll removal, in addition to enhancing the regenerability of the adsorbent for chlorophyll removal by successive calcination.

The examples which follow are given for illustrative purposes and are not meant to limit the invention described herein. The following abbreviations have been used throughout in describing the invention:

Å - Angstrom(s)
AOCS - American Oil Chemists' Society
APD - average pore diameter
BET - Brunauer-Emmett-Teller
cc - cubic centimeter(s)
ChlA - chlorophyll A
cm - centimeter
°C - degrees Centigrade
°F - degrees Fahrenheit
g - gram(s)
ICP - Inductively Coupled Plasma
m - meter
μ - micron
ml - milliliter(s)
nm - nanometer
ORSBO - once refined soybean oil
P - phosphorus
ppm - parts per million
% - percent
PV - pore volume
SA - surface area
SBO - soybean oil
wt - weight

EXAMPLE I

(Preparation of Silica Alumina Absorbent)

Two adsorbents were prepared by selecting milled silica hydrogels and precipitating $Al_2O_3$ onto the silica. The first silica hydrogel was TriSyl® silica (Davison Chemical Division of W.R. Grace & Co.) and the second was similar except that the surface area was lower. Analyses are shown in Table I. Both adsorbents were prepared by first dissolving sufficient $Al_2(SO_4)_3 \cdot 18H_2O$ in water to yield 4 weight percent $Al_2O_3$ on $SiO_2$ (dry basis). The correct amount of silica hydrogel was added and slurried. A pH of 3.5 was typical at this point. Aqueous ammonium hydroxide (30 weight %) was added dropwise until a pH of 8 was measured. The sample was filtered and reslurried three times in excess isopropyl alcohol with successive filtrations. After drying in a vacuum oven for 2 hours at 200°C the adsorbents were calcined for 2 hours at 760°C. The adsorbents were identified as silica aluminas #1 and #2. Properties of the silica hydrogels and calcined adsorbents are reported in Table I below.

## TABLE I

### Silica Alumina Adsorbents

|  | Silica Hydrogels # | | Calcined Silica Alumina # | |
|---|---|---|---|---|
|  | 1 | 2 | 1 | 2 |
| Total Volatiles (wt.%)[1] | 63.2 | 61.2 | 1.7 | 1.2 |
| $Na_2O$(wt.%) | 0 | 0.4 | 0.03 | 0.06 |
| $Al_2O_3$(wt.%) | 0.1 | 0.2 | 3.8 | 3.9 |
| Surface Area $(m^2/g)$[2] | 733 | 491 | 544 | 402 |
| Pore Volume $(cc/g)$[2] | 1.06[4] | 1.55[4] | 1.28 | 1.46 |
| APD $(Å)$[3] | 58 | 126 | 94 | 145 |
| Average Particle Size $(\mu)$ | -- | -- | -- | -- |

1. Total Volatiles = (as is weight minus weight after ignition at 954°F) x 100%.
2. Measured by BET technique.
3. From the equation: Average Pore Diameter (APD)
   $$(Å) = \frac{40000 \times PV \ (cc/g)}{SA(m^2/g)}$$
4. Measured pore volume after activation for ____ hours at ____ °C.

EXAMPLE II

(Evaluation of Chlorophyll Adsorption Capacities of Silica Alumina)

The silica aluminas #1 and #2 prepared in Example I were tested for their ability to remove chlorophyll from partially refined edible oils. Samples of caustic refined canola and soybean oils were obtained and were first treated with TriSyl silica to a phosphorus content of approximately 1 ppm (measured by ICP) and zero residual soap (measured by AOCS Method Cc 17-79). Results are reported in Table II for increasing adsorbent loadings. It was observed that the capacities of both adsorbents were very comparable. The typical target oil chlorophyll content after this unit operation in commercial practice is less than about 0.05 ppm chlorophyll.

## TABLE II

### Chlorophyll Capacities of Silica Alumina Adsorbents[1]

| Oil (Adsorbent Loading wt.%) | Chlorophyll Capacity (mg ChlA/kg adsorbent) | |
|---|---|---|
| | Silica Alumina #1 | Silica Alumina #2 |
| Soybean Oil (0.62 ppm ChlA)[2] | | |
| 0.1 | 250 | 200 |
| 0.3 | 187 | 180 |
| 0.5 | 120 | 118 |
| Canola (25.1 ppm ChlA)[3] | | |
| 0.7 | 3010 | 2930 |
| 1.0 | 2350 | 2310 |
| 1.5 | 1630 | 1620 |
| 2.0 | 1240 | 1240 |

1. Capacities after 0.5 hrs. at 100°C, atmospheric pressure
2. Once refined soybean oil contained 1 ppm P, no soap.
3. Pretreated super degummed canola with TriSyl 300 silica to achieve ~1 ppm P.

EXAMPLE III

(Adsorption of Chlorophyll on Silica Alumina Adsorbents with Different $Al_2O_3$ Content)

A series of five adsorbents containing nominally 2, 4, 8, 12 and 24 weight percent $Al_2O_3$ on a dry solids basis was prepared as described in Example I with the appropriate level of $Al_2(SO_4)_3 \cdot 18H_2O$. The starting

Silica #3, quantities of reactants and final properties of the adsorbents, identified as silica alumina #3, #4, #5, #6 and #7, are reported in Table III.

EP 0 558 173 A1

## TABLE III

### Silica Alumina Adsorbents

| Properties | Silica # | Silica Alumina # | | | | |
|---|---|---|---|---|---|---|
| | 3 | 3 | 4 | 5 | 6 | 7 |
| $Al_2(SO_4)_3$ $18H_2O$ (g) | -- | 27.85 | 55.7 | 111.4 | 167.15 | 334.25 |
| Silica #3 (g) | -- | 500 | 500 | 500 | 500 | 500 |
| $H_2O$ (g) | -- | 1160 | 1160 | 1160 | 1160 | 1160 |
| Isopropanol (g) | -- | 1160 | 1160 | 1160 | 1160 | 1160 |
| Total Volatiles (wt.%) | 57.3 | 1.13 | 0.81 | 1.38 | 2.31 | 3.01 |
| $Na_2O$ (wt.%) | 0.1 | 0.06 | 0.06 | 0.06 | 0.06 | 0.06 |
| $Al_2O_3$ (wt.%) | 0.05 | 1.98 | 3.90 | 7.55 | 11.05 | 19.84 |
| Surface Area ($m^2/g$) | 339 | 302 | 283 | 267 | 253 | 218 |
| Pore Volume (cc/g) | 1.36 | 1.34 | 1.28 | 1.23 | 1.19 | 1.11 |
| Average Pore Diameter (Å) | 160 | 177 | 181 | 184 | 188 | 204 |
| Average Particle Size ($\mu$) | 18.1 | 18.2 | 19.6 | 20.8 | 22.5 | 29.0 |

EXAMPLE IV

The silica alumina adsorbents of Example III were used to treat soybean and canola oils containing typical levels of chlorophyll. The results reported in Table IV show that the efficiency for chlorophyll adsorption passes through a maximum at about 4 weight percent $Al_2O_3$.

## TABLE IV

### Adsorption of Chlorophyll from Soybean and Canola Oils on Adsorbents with Different $Al_2O_3$ Contents

A. Soybean Oil[1]

| Silica Alumina # | Chlorophyll A After Treatment (ppm)[2] | | | | |
|---|---|---|---|---|---|
| | 3 | 4 | 5 | 6 | 7 |
| Nominal $Al_2O_3$ (wt.%) | 2 | 4 | 8 | 12 | 24 |
| Adsorbent Usage (as is, wt.%) | | | | | |
| 0.15 | 0.33 | 0.22 | 0.27 | 0.32 | 0.32 |
| 0.30 | 0.18 | 0.13 | 0.15 | 0.21 | 0.22 |
| 0.50 | 0.07 | 0.05 | 0.07 | 0.10 | 0.13 |

11

TABLE IV (Continued)

B.  Canola³

| Silica Alumina # | Chlorophyll A After Treatment (ppm) | | | | |
|---|---|---|---|---|---|
| Nominal Al₂O₃ (wt.%) | 3 | 4 | 5 | 6 | 7 |
|  | 2 | 4 | 8 | 12 | 24 |
| 1 | 2.71 | 1.84 | 2.08 | 2.84 | 3.65 |
| 2 | 0.59 | 0.32 | 0.45 | 0.64 | 0.67 |
| 3 | 0.26 | 0.13 | 0.15 | 0.21 | 0.24 |
| 4 | 0.14 | 0.07 | 0.07 | 0.10 | 0.11 |
| 5 | 0.08 | 0.04 | 0.04 | 0.05 | 0.05 |

1.  Starting soybean oil contained 0.61 ppm ChlA as measured by Lovibond AF960.
2.  Oil was treated for 30 minutes at 100°C at the indicated loadings at atmospheric pressure.
3.  Starting oil chlorophyll ChlA = 24.1 ppm as measured by Lovibond AF960.

EXAMPLE V

(Regenerability of Silica Alumina in Absence or Presence of Soaps)

Another silica alumina was prepared on a TriSyl® silica base with a target of nominal 4 weight percent $Al_2O_3$ as in Example I. Its properties are reported below as "Fresh" adsorbent.

|  |  | Fresh |
| --- | --- | --- |
| $Na_2O$ | (wt.%) | 0.04 |
| $Al_2O_3$ | " | 4.44 |
|  |  |  |
| $P_2O_5$ | " | 0.0 |
| CaO | " | 0.078 |
| MgO | " | 0.026 |
| $Fe_2O_3$ | " | 0.014 |
|  |  |  |
| Surface Area ($m^2$/g) |  | 521 |
| Pore Volume (cc/g) |  | 1.18 |

The adsorbent was used to treat a commercially once refined soybean oil (ORSBO) which contained less than 1 ppm P and no measurable soap. After a treatment for 30 minutes at 100°C at atmospheric pressure with an adsorbent loading of 0.5 wt.% (as is), ChlA was measured. Then the used adsorbent was regenerated by calcining for 2 hours at 760°C in air. Then, repeat cycles of adsorption and regeneration were performed. Results of the repeat cycles are reported in Table V. It is apparent that with no soap present the adsorbent maintained its performance after six regenerations.

Example VI

The same "Fresh" adsorbent as Example IV was used to treat identical ORSBO to which caustic had been added to form 49 ppm soap. Results for fresh and regenerated treatment cycles performed as in the previous Example V are reported in Table V. It is apparent that the presence of soaps substantially decreased performance of the adsorbent in a cumulative fashion. Recognize that a typical commercially refined oil ChlA content after adsorption is 0.05 ppm.

Example VII

The used adsorbents of Examples V and VI were regenerated for 2 hours at 760°C in air and used to treat ORSBO containing no soaps. Results in Table V (Comparison Cycle #6) demonstrates the superiority of the no soap process to prolong adsorbent life.

## TABLE V

| | Adsorbent of Ex. V Treating Once Refined SBO (Soap = 0 ppm) | | Adsorbent of Ex. V Treating Once Refined SBO (Soap = 49 ppm) | |
|---|---|---|---|---|
| | $ChlA^2$ | $R/Y^2$ | $ChlA^2$ | $R/Y^2$ |
| Untreated Oil[1] | 0.61 | 12/70 | 0.61 | 12/70 |
| Fresh Adsorbent | 0.04 | 2.3/53 | 0.08 | 2.8/70 |
| Regenerated Cycle #1 | 0.02 | 1.7/34 | 0.06 | 2.8/70 |
| "        "      #2 | 0.02 | 1.7/35 | 0.08 | 4.0/70 |
| "        "      #3 | 0.03 | 1.9/54 | 0.13 | 5.4/70 |
| "        "      #4 | 0.03 | 2.0/57 | 0.21 | 8.1/70 |
| "        "      #5 | 0.03 | 2.0/57 | 0.29 | 8.7/70 |
| Comparison Cycle #6[3] | 0.03 | 2.0/57 | 0.30 | 8.9/70 |

1.  ORSBO
2.  Measured in Lovibond Automatic Tintometer AF960, 5 1/4" cell.
3.  Both adsorbents treated ORSBO containing no soap in this test (Example VII).

EP 0 558 173 A1

EXAMPLE VIII

(Regenerability of Bleaching Clay)

A commercial acid activated clay as described in Example VII was used to treat an ORSBO containing O ppm soaps, <1 ppm P and 0.62 ChlA. Fresh adsorbent (.05%) was added to 100°C oil for 30 minutes, then filtered. Used clay was calcined 2 hours at 760°C for re-use. The results of fresh clay and two regeneration cycles are shown in Table VI below. Extreme regeneration temperatures as used herein were not able to return the clay to its original performance even though no soaps or substantial ppm P were present.

TABLE VI

| Silica Alumina Absorbent | Bleaching Results | |
|---|---|---|
| | ChlA (ppm)[1] | Lovibond Red[1] |
| Fresh | 0.03 | 2.6 |
| Regeneration #1 | 0.155 | 4.8 |
| Regeneration #2 | 0.16 | 4.8 |

1.    By Lovibond AF960 Tintometer.

## Claims

1. A process for removal of chlorophyll from glyceride oils comprising
   (a) selecting a glyceride oil comprising chlorophyll, phospholipids and/or soaps and metal ions;
   (b) treating the glyceride oil of step (a) to remove phospholipids and/or soaps and metal ions to obtain commercially acceptable levels thereof;
   (c) selecting an adsorbent comprising a high surface area amorphous silica alumina which has less than about 10% aluminum as $Al_2O_3$;
   (d) contacting the glyceride oil of step (c) and the silica alumina adsorbent of step (b);
   (e) allowing chlorophyll to be adsorbed onto said silica alumina adsorbent;
   (f) separating the resulting glyceride oil of step (e) from the adsorbent; and
   (g) independently, recovering the resulting oil and the spent silica alumina adsorbent.

2. The process of claim 1 in which said amorphous silica alumina has a surface of at least about 100 square meters per gram.

3. The process of claims 1 or 2 in which said amorphous silica alumina is prepared from silica gels, precipitated silicas, dialytic silicas, fumed silicas or silica aluminas.

4. The process of claims 1 to 3 in which said amorphous silica alumina has from about 2% to about 8% aluminum as $Al_2O_3$.

5. The process of claims 1 to 4 in which the amorphous silica alumina has a pore diameter of at least 6.0 nm.

6. The process of claims 1 to 5 in which the glyceride oil of step (a) is treated with bleaching earth or with an amorphous silica which may optionally have been acid-treated, to remove phospholipids and/or soaps and metal ions.

7. The process of claims 1 to 6 which further comprises
(f) calcining the recovered spent silica alumina adsorbent at a temperature in excess of 400°C to regenerate the adsorbent to remove chlorophyll;
(g) contacting a quantity of the glyceride oil of step (b) with the regenerated silica adsorbent of step (f) to remove chlorophyll to obtain commercially acceptable levels thereof; and
(h) separating and recovering, independently, the resulting glyceride oil and the spent silica adsorbent,
(i) repeatedly subjecting the spent silica alumnia adsorbent of step (h) to steps (f), (g) and (h), successively.

8. An improved process for the refining of glyceride oil, which process comprises the steps of phospholipid removal, bleaching and deodorizing, the improvement comprising removing chlorophyll by contacting said glyceride oil with a high surface area amorphous silica alumina adsorbent comprising less than 10% of aluminum as $Al_2O_3$, said glyceride oil having been treated to reduce phospholipids to a commercially acceptable level prior to contacting the oil with said silica alumina adsorbent.

9. A sequential treatment process for decreasing the phospholipid content of and decoloring glyceride oils comprising:
(a) treating said glyceride oil to remove phospholipids to a commercially acceptable level;
(b) contacting the treated oil of step (a) with an amorphous silica alumina adsorbent comprising a high surface area of at least 100 $m^2$/g; an aluminum content as $Al_2O_3$ of less than 10%; and a pore diameter of at least 6.0 nm.

10. A regenerable adsorbent having the improved capability of retaining all or substantially all of its ability to remove chlorophyll from a phospholipid-depleted glyceride oil which adsorbent consists essentially of a spent silica alumina adsorbent recovered in the process of claims 1 to 9 which is optionally calcined at a temperature in excess of 400°C to regenerate the adsorbent for removal of chlorophyll from a glyceride oil.

**European Patent Office**

## EUROPEAN SEARCH REPORT

Application Number

EP 93 25 0062

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 376 406 (UNILEVER NV)<br>* claims 1-8,16,17,23-26,29,30; example 3; table 4 *<br>* page 3, line 52 - line 56 * | 1-10 | C11B3/10 |
| X<br><br>A | EP-A-0 053 016 (UNILEVER NV)<br><br>* claims 1,9,10,13,18,20; examples 3-5,7 * | 1,3,4,6,<br>8,9<br>7,10 | |
| X<br><br>Y | EP-A-0 412 624 (W.R. GRACE & CO.)<br><br>* page 5, line 15 - line 21; claims 1,3,5,10 *<br>* page 5, line 57 - line 58 * | 1-3,5,6,<br>8,9<br>4,7,10 | |
| D,Y<br>A | EP-A-0 269 173 (UNILEVER NV)<br>* page 4, line 45 - page 5, line 7; claims 1,5-7,9,11,13,15; examples 1-3,5-9 *<br>* page 3, line 18 - line 37 *<br>* page 6, line 17 - line 21 *<br>* page 5, line 55 - line 58 * | 4,7,10<br>5 | |
| | ----- | | TECHNICAL FIELDS SEARCHED (Int. Cl.5)<br><br>C11B<br>B01J |

The present search report has been drawn up for all claims

| Place of search | Date of completion of the search | Examiner |
|---|---|---|
| THE HAGUE | 04 JUNE 1993 | KANBIER D.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document